# EUROPEAN PATENT APPLICATION

(11) **EP 4 371 522 A1**
(43) Date of publication of application: **22.05.2024**
(21) Application number: 22208483.2
(22) Date of filing: 21.11.2022
(51) Int. Cl.: A61C 1/00, A61C 17/028

(54) **INTERMITTING WATER SPRAY FOR MOISTENING AND COOLING DENTAL TISSUES AND TEETH**

(71) Applicant: DENTSPLY SIRONA Inc., York, PA 17401 (US); Sirona Dental Systems GmbH, 64625 Bensheim (DE)
(72) Inventor: HILL, Volker, 64625 Bensheim (DE); MATTHIES, Richard, 64625 Bensheim (DE)
(74) Representative: Özer, Alpdeniz

(57) **Abstract**

The present invention relates to a dental treatment unit (1) comprising: a chair (2) for seating a patient; a hand-held instrument (6) having an ultrasonic actuator, an electric motor, or turbine for driving a dental tool (7), and a nozzle (8) for ejecting a water spray (9) for moistening or cooling the dental tissue (24) or tooth (25) of the patient being treated; a fluid supply device (16) for suppling pressurized water to the nozzle (8), wherein the fluid supply device (16) has at least one electrically or pneumatically controllable water valve (21) for adjusting the water spray (9) ejected by the said nozzle (8), characterized in that the fluid supply device (16) is adapted to automatically generate a driving signal (S3) having a sequence of pulses that control the water valve (21) in order to turn the water spray (9) sequentially on/off.

## Description

### TECHNICAL FIELD OF THE INVENTION

The present invention relates to dental treatment units for performing dental treatments such as restorative, endodontic, periodontal, implant treatment and the like.

### BACKGROUND OF THE INVENTION

In general, dental treatment units have handheld dental instruments commonly known as handpieces for performing dental treatments such as restorative, endodontic, periodontal, implant treatment and the like. In general, a prior art handpiece has an electric motor or alternatively a turbine for rotating a dental tool such as a drill, excavator, or a polishing disc, and the like.

When using a prior art handpiece, the tissue or the tooth processed by the dental tool must be moistened or cooled for various reasons. For this purpose, a fine water mist is sprayed onto the tissue or the tooth either through the assistant by using a separate spray device or where available through the nozzle in the head of the handpiece used by the dentist.

In general, a prior art spray device is manually operable. However, if not properly used by the assistant, a prior art spray device may eject relatively high amounts of water spray so that the visibility can be obscured during drilling or excavation. Moreover, the polishing material can receive too much water.

On the other hand, a prior art handpiece generally has a water nozzle for spraying a water spray. In dental treatment units, the adjustment of the water spray through the nozzle is implemented via a water throttle. According to the prior art, the water spray volume is reduced either by a manual throttle or by an electronic throttle. However, the throttles currently in use greatly vary when small flow rates are set so that small water spray quantities cannot be currently delivered with a constant accuracy.

### DISCLOSURE OF THE INVENTION

The inventors are currently not aware of any dental treatment unit in which the spray quantity of the handpiece is reduced through applying on/off cycles (e.g., through pulse width modulation) to the water valve and not essentially through further closing a water throttle.

The objective of the invention is to provide a dental treatment unit in which small spray quantities can be controlled more accurately in accordance with the needs of the dental treatment.

This objective has been achieved by the dental treatment unit according to claim 1.

The dental treatment unit according to the present invention comprises a chair for seating a patient; a hand-held instrument having an ultrasonic actuator, an electric motor or a turbine for driving a dental tool, and a nozzle for ejecting a water spray for moistening or cooling the dental tissue or tooth of the patient being treated; a fluid supply device for suppling pressurized water to the nozzle, wherein the fluid supply device has at least one electrically or pneumatically controllable water valve for adjusting the water spray ejected by the nozzle. The fluid supply device is further adapted to automatically generate a driving signal having a sequence of pulses that control the water valve in order to turn the water spray sequentially on/off.

A major advantageous effect of the present invention is that water spray quantities can be accurately generated in relatively small amounts through the sequence of pulses.

For comparison, according to the prior art the excavating process is often performed without using the assistant's spray device to ensure good visibility. However, the tissue and tooth can be damaged by the heat load of the excavating tool. A major advantageous effect of the present invention is that it is possible to work with the handheld instrument without severely obstructing the view as a result of the intermittently provided small water spray quantities during excavation or drilling. In this case, the tissue and tooth can be properly cooled, and any damage can be avoided.

For comparison, according to the prior art during the polishing process the tooth is solely moistened manually with the assistant's spray device such that the water is distributed over a polishing disc. A major advantageous effect of the present invention is that hand-held instrument can be also used by the dentist, for example, during the polishing process by providing intermittently small water spray quantities. Thereby the polishing material can be prevented from receiving too much water. Moreover, the polishing process can be performed more dependably by the dentist without the assistant having to intervene with the separate spray device.

According to one preferred embodiment of the present invention, the water valve can be a solenoid valve. Alternatively, different type of valves can be used, eg., pneumatic valves.

According to the present invention one or more water throttles can be optionally used additionally on the upstream side and/or downstream side of the electrically/pneumatically controllable water valve to reduce the water flow.

According to the present invention the water spray can also be optionally admixed with a pressurized air spray. The air spray and the water spray can be mixed in a chamber immediately prior to the ejection through a common nozzle located on the head of the handheld instrument towards the dental tool. Alternatively, the air spray and the water spray can be separately ejected from adjacent nozzles respectively located on the head of the handheld instrument towards the dental tool. The air spray can be constant or alternatively pulsated like the pulsating water spray.

According to the present invention the pulsating water spray can be controlled by the dentist through a user interface. In particular the quantity of the pulsating water spray can be adjusted in accordance with the treatment to be applied to the patient.

### BRIEF DESCRIPTION OF THE DRAWINGS

In the following description, the present invention will be explained in more detail by means of exemplary embodiments and with reference to the drawings, wherein
Fig. 1 - shows a schematic drawing of a dental treatment unit according to an embodiment of the present invention;
Fig. 2 - shows a schematic drawing of a dental treatment unit according to another embodiment of the present invention, wherein the hoses are connected to the water tower for cleaning/sanitizing;
Fig. 3 - shows a schematic drawing of an instrument of the dental treatment unit according to an embodiment of the present invention, wherein a dental tool such as a drilling tool has been mounted to the head, and a water spray is intermittingly ejected;
Fig. 4 - shows a schematic drawing of an instrument of the dental treatment unit according to an embodiment of the present invention, wherein a drilling tool is used to mill a tooth while being cooled through an intermitting water spray;
Fig. 5 - shows a schematic drawing of an instrument of the dental treatment unit according to an embodiment of the present invention, wherein an excavating tool is used to excavate a tooth while being cooled through an intermitting water spray;
Fig. 6 - shows a schematic drawing of an instrument of the dental treatment unit according to an embodiment of the present invention, wherein a polishing tool has been mounted and a water spray is intermittingly ejected;
Fig. 7 - shows a schematic block diagram of a fluid supply device of the dental treatment unit according to an embodiment of the present invention;
Fig. 8 - shows a diagram illustrating different electrical/pneumatical driving signals for the water valve and air valve of the fluid supply device of the dental treatment unit according to an embodiment of the present invention.

The reference numbers shown in the drawings designate the elements listed below, which are referred to in the following description of the exemplary embodiments.
- 1.: Dental treatment unit
- 2.: Chair
- 3.: Chair base
- 4.: Dentist's element
- 5.: Assistant's element
- 6.: Instrument
6a. Handpiece (ultrasonic/motor/turbine)
6b. Spray device
6c. Suction hose
- 7.: Dental tool
7a. Drilling tool
7b. Excavating tool
7c. Polishing tool
- 8, 8': Nozzle (Water/Air)
- 9.: Water spray
- 10.: Illumination
- 11.: Instrument coupling
- 12.: Hose
- 13.: User interface
- 14.: Footswicth
- 15.: Water tower
- 16.: Fluid supply device
- 17.: Control unit
- 18.: Air pump
- 19.: Air valve
- 20.: Water pump
- 21.: Water valve
- 22, 22': Throttle (Air/Water)
- 23.: Fluid line
- 24.: Tissue
- 25.: Tooth

- S1, S2, S2', S3, S4:: Driving signals

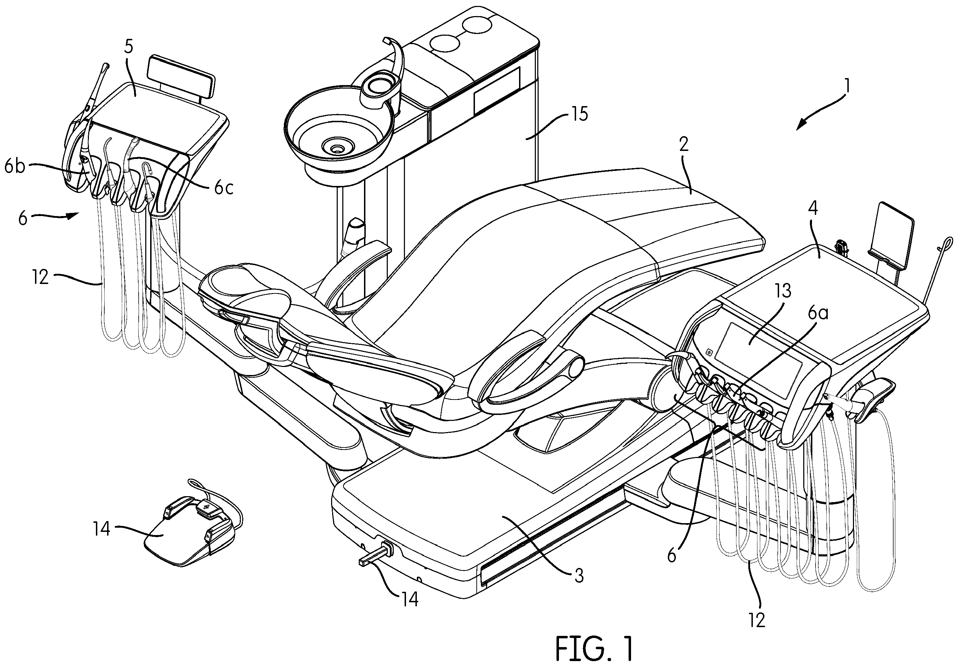

Fig. 1 shows a partial schematic drawing of a dental treatment unit (1) according to an embodiment of the present invention. The dental treatment unit (1) comprises: a chair (2) for seating a patient (not shown), wherein the chair (2) is adjustable through one or more motorized mechanisms (not shown); a chair base (3) holding the chair (2); a dentist's element (4) for depositing dental instruments (6); and an assistant's element (5) for depositing dental instruments (6).

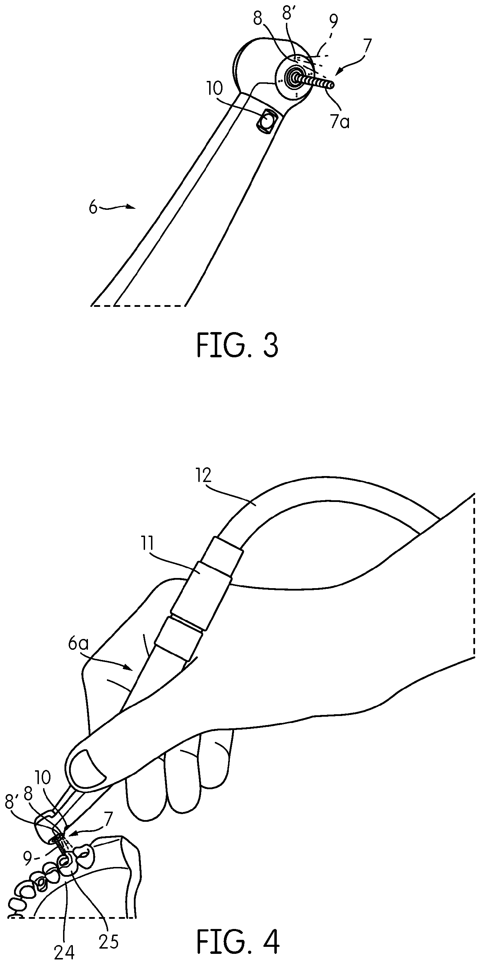

The dental instruments (6) on the dentist's element (4) comprises handpieces (6a) which have an ultrasonic actuator, an electric motor or alternatively a turbine. As shown in Figures 3 to 6, the head of the dental instruments (6) can be equipped with various dental tools (7) such as a drilling tool (7a), an excavating tool (7b), a polishing tool (7c), a scaler, and the like, which are exchangeable. As shown for example in Fig. 3 at least some of the dental instruments (6) each have at least a water nozzle (8) in the head for ejecting a water spray (9) towards the dental tool (7). The dental instruments (6) preferably have illuminations (10). As shown in Fig. 1, the dental instruments (6) on the assistant's element (5) may comprises a spray device (6b), various suction hoses (6c) and the like. The spray device (6b) used by the assistant has no dental tool (7), and is solely for ejecting a water spray (9).

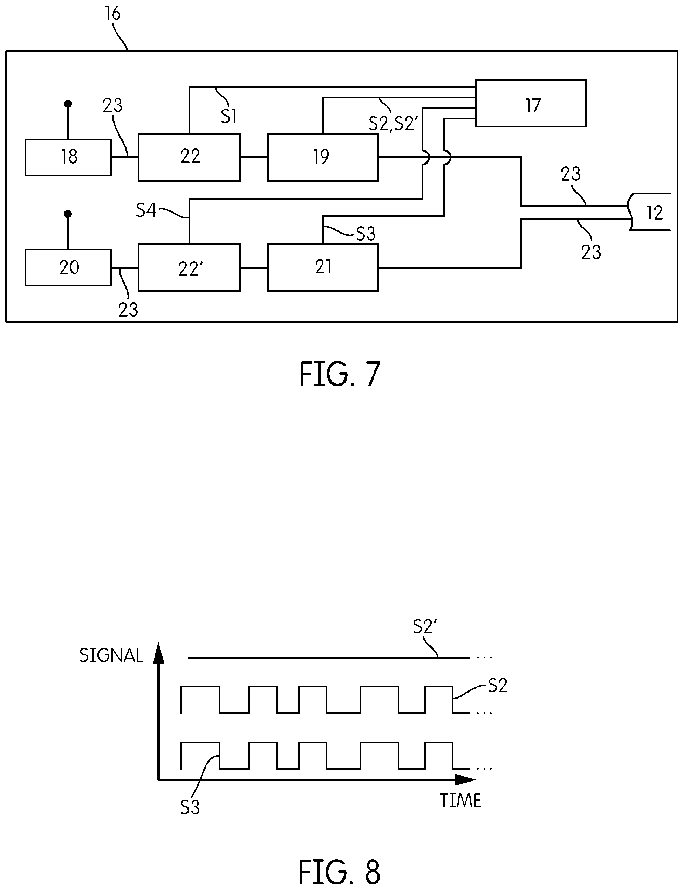

As shown in Fig. 4, the dental instruments (6) are connected to the dental treatment unit (1) via detachable couplings (11) and hoses (12). The hoses (12) include electric wires (not shown) and fluid lines (23) (see Fig. 7) for conveying pressurized water and/or air to the respective nozzles (8,8'). As shown in Fig. 7 the dental treatment unit (1) also has a fluid supply device (16) for suppling the pressurized water and/or air to the nozzles (8;8') in the head of the dental instruments (6). The fluid supply device (16) will be explained later in more detail.

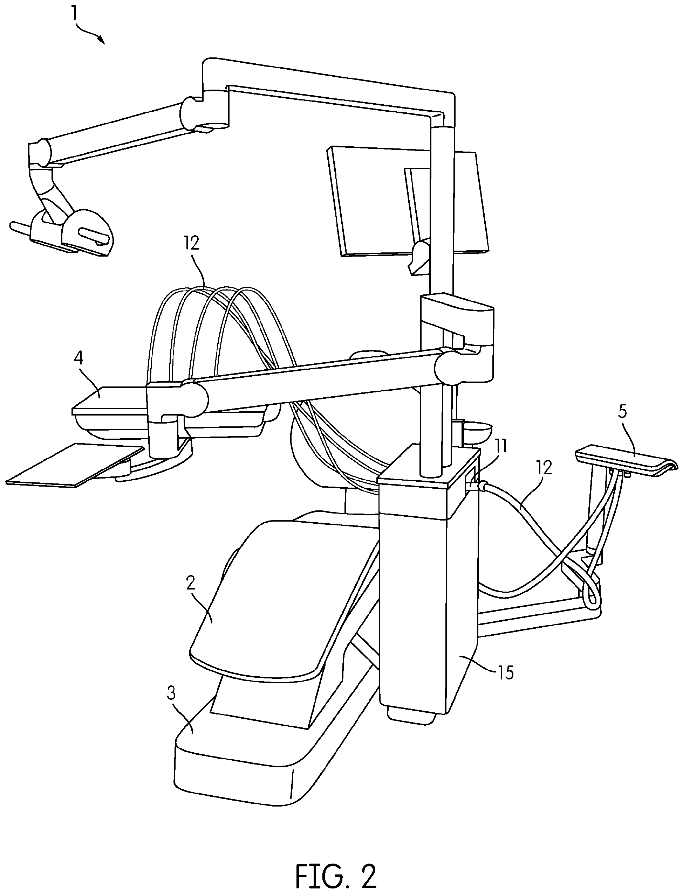

As shown in Fig. 1 and Fig. 2 the dental treatment unit has a water tower (15) for cleaning/sanitizing the instruments (6) and for supplying the same with water and/or air. The water tower (15) is optionally configurable for left or right handed use through a changeover mechanism. As shown in Fig. 2, the couplings (11) and hoses (12) are detachably connectable to the water tower (5) for cleaning/sanitizing the instruments (6). The cleaning/sanitizing operations can be activated and controlled by the dentist/assistant through a user interface (13). The couplings (11) have openings for releasable connection to the fluid ports on the water tower (15).

As shown in Fig. 1, at least one user interface (13) is integrated into the dentist's element (4) of the dental treatment unit (1). The user interface (13) has a touchscreen display and/or buttons for controlling the functions of the dental treatment unit (1). The dental treatment unit (1) has one or more footswitches (14). The footswitches (14) are user-configurable for ergonomically operating various functions of the dental treatment unit (1). The dental treatment unit (1) also has an integrated computer (not shown) operable trough the user interface (13).

The dental treatment unit (1) is preferably configurable as an IoT device and is bidirectionally connectable via a local area network and/or the internet (not shown) to other dental devices such as optical intraoral scanners, x-ray devices, milling machines, additive manufacturing machines and the like for cloud computing, data exchange, remote control, and the like.

### Fluid supply device

As shown in Fig. 7, the dental treatment unit (1) has a fluid supply device (16) for selectively supplying pressurized air and/or water to the nozzles (8;8') in the head of the dental instruments (6). The settings of the fluid supply device (16) can be performed via the user interface (13) through the dentist in accordance with the dental treatment and the dental instrument (6) to be used. The settings can be personalized in accordance with the dentist and the patient. The fluid supply device (16) has separate sections for the supply of pressurized air and water respectively. The supply of the pressurized air and water can be activated and controlled separately or in combination via the user interface (13).

### Pressurized water spray

The fluid supply device (16) has a water pump (20), a water throttle (22'), and an electrically controllable water valve (21) serially connected via fluid lines (23) that supply the pressurized water to the water nozzle (8) in the head of the dental instrument (6). The fluid supply device (16) also has a control unit (17) which generates electrical driving signals S3 and S4 for controlling the water valve (21) and the water throttle (22') respectively. Alternatively, the driving signal S3 can be a pneumatic signal where the water valve (21) is pneumatic. Through the driving signal S4, the water throttle (22') can be controlled to increase/decrease the water flow within a predetermined range during the water valve (21) is open. The throttle (22') can preferably adjust the water flow for example between 80 ml/min to 10 ml/ min. As shown in Fig.7, when the water flow is to be further reduced to relatively low values eg. preferably below average 10 ml/min, then the control unit (17) generates a driving signal S3 with PWM (pulse width modulation) which is a sequence of pulses that electronically open/close the water valve (21) in order to turn the water spray (9) sequentially on/off. The PWM driving signal S3 is preferably ON in the range of 50-500 ms, and preferably OFF in the range of 50-3000 ms. The driving signals S3 and S4 can be set by the dentist via the interface (13) in accordance with the desired amount of the intermitting water spray (9) to be ejected from the water nozzle (8). Once the settings are performed by the dentist, the sequence of pulses is generated automatically. The throttle (22') is optional. The above operating ranges serve as example, for better understanding the invention. Different operating ranges can be realized by adapting the hydraulic circuit accordingly for providing an intermitting water spray.

### Pressurized air spray

The fluid supply device (16) has an air pump (18), an air throttle (22), and an air valve (19) serially connected via the fluid lines (23) that supply the pressurized air to the air nozzle (8') in the head of the dental instrument (6) so that the air nozzle (8 ') ejects an air spray.

The control unit (17) can generate electrical driving signals S1 and S2 for controlling the air throttle (22) and the air valve (19) respectively. Through the driving signal S1, the air throttle (22) can be controlled to increase/decrease the air flow within a predetermined range when the air valve (19) is open. As shown in Fig.7, the control unit (17) can generate various driving signals S2 and S2' The driving signal S2' is a constant signal to achieve a constant air flow so that the nozzle (8') constantly ejects pressurized air. For example, the driving signal S2' has a PWM (pulse width modulation) so that the nozzle (8') intermittingly ejects a pressurized air spray. The driving signal S2 and S2' can be selectively set by the dentist via the user interface (13) in accordance with the desired amount of air to be ejected.

The water nozzle (8) and the air nozzle (8') are arranged side by side in the head of the dental instrument (6) so that the water spray (9) can be mixed with pressurized air and directed towards the dental tool (7). The water spray (9) can be also ejected separately when the pressurized air is turned off.

In an alternative embodiment (not shown) the water nozzle (8) and the air nozzle (8') can be provided as single nozzle on the head of the dental instrument (6) which is communicating with a mixing chamber that receives both the fluid lines (23) for water and air. The mixing chamber can be arranged into the head of the dental instrument (6).

### Application examples

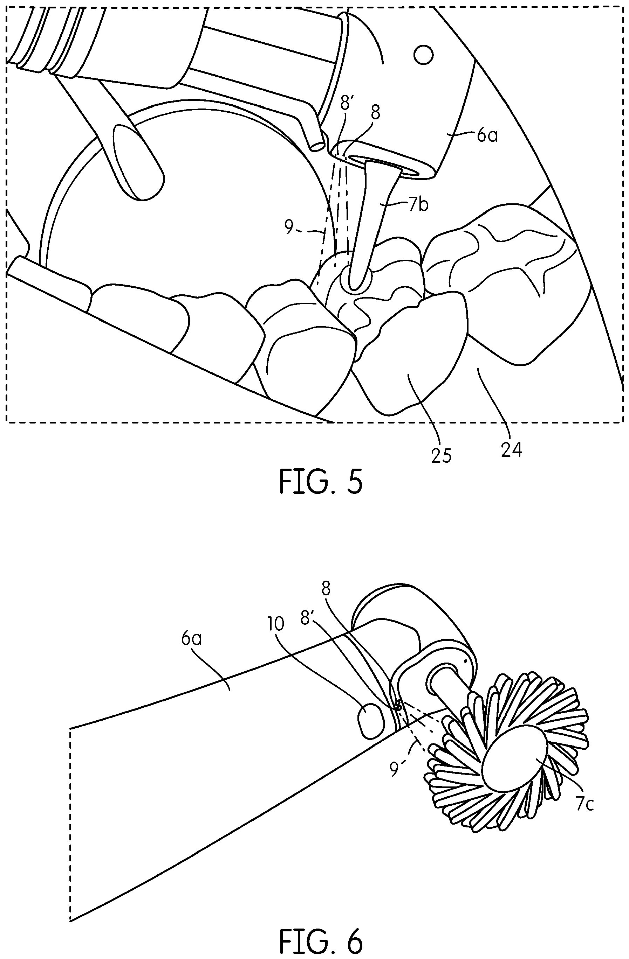

The dental instrument (6) of the present invention can be used, for example, for drilling or alternatively for excavation. According to the present invention the dentist can operate the dental instrument (6) so as to eject a pulsating water spray (9) during the drilling process as shown in Fig. 4. According to the present invention the dentist can operate the dental instrument (6) so as to eject a pulsating water spray (9) during the excavating process as shown in Fig. 5 . With the present invention, it is possible to work with an intermitting water spray (9) ejected with an ON/OF regime without severely obstructing the view. Thereby, the tissue (24) and the tooth (25) can be moistened and cooled, and any damages can be avoided.

The dental instrument (6) of the present invention can alternatively be used, for example, for polishing. According to the present invention the dentist can operate the dental instrument (6) so as to eject an intermitting water spray (9) ejected with an ON/OFF regime during the polishing process as shown in Fig. 6.

The water spray (9) can be also optionally further combined with a constant or intermitting air spray (not shown) through the nozzle (8'), which is cyclically turned on/off. The air spray and the water spray on/off cycles are preferably in phase. But alternatively, they can be shifted by a desired settable amount or have different cycles.

## Claims

1. A dental treatment unit (1) comprising:
a chair (2) for seating a patient;
a hand-held instrument (6) having an ultrasonic actuator, an electric motor, or turbine for driving a dental tool (7), and a nozzle (8) for ejecting a water spray (9) for moistening or cooling the dental tissue (24) or tooth (25) of the patient being treated;
a fluid supply device (16) for suppling pressurized water to the nozzle (8), wherein the fluid supply device (16) has at least one electrically or pneumatically controllable water valve (21) for adjusting the water spray (9) ejected by the said nozzle (8);
**characterized in that**
the fluid supply device (16) is adapted to automatically generate a driving signal (S3) having a sequence of pulses that control the water valve (21) in order to turn the water spray (9) sequentially on/off.
